# EUROPÄISCHE PATENTSCHRIFT

(11) **EP 1 498 006 B1**
(45) Veröffentlichungstag und Bekanntmachung des Hinweises auf die Patenterteilung: **07.06.2006**
(21) Anmeldenummer: 03720346.0
(22) Anmeldetag: 22.03.2003
(51) Int. Cl.: H04Q 11/00

(54) **OPTISCHE SCHALTSTATION UND VERMITTLUNGSVERFAHREN DAFÜR**
OPTICAL SWITCHING STATION AND CONNECTION METHOD FOR THE SAME
STATION DE COMMUTATION OPTIQUE ET PROCEDE DE COMMUTATION ASSOCIE

(30) Priorität: 23.03.2002 DE 10213133; 10.07.2002 DE 10231275
(43) Veröffentlichungstag der Anmeldung: 19.01.2005
(73) Patentinhaber: Marconi Communications GmbH, 71520 Backnang (DE)
(72) Erfinder: PICHLER, Olaf, 71522 Backnang (DE); GUILD, Kenneth, Colchester, Essex CO7 9SW (GB); ELBERS, Jörg-Peter, 81429 München (DE)
(74) Vertreter: Heuer, Wilhelm
(86) Internationale Anmeldenummer: PCT/EP2003/002998
(87) Internationale Veröffentlichungsnummer: WO 2003/081941

(56) Entgegenhaltungen:
- EP-A- 0 620 694
- EP-A- 1 111 953
- EP-A- 1 278 325
- WO-A-01/74111
- SABELLA R ET AL: "IMPACT OF TRANSMISSION PERFORMANCE ON PATH ROUTING IN ALL-OPTICAL TRANSPORT NETWORKS" JOURNAL OF LIGHTWAVE TECHNOLOGY, IEEE. NEW YORK, US, Bd. 16, Nr. 11, November 1998 (1998-11), Seiten 1965-1971, XP000831709 ISSN: 0733-8724
- KUZNETSOV M ET AL: "A NEXT-GENERATION OPTICAL REGIONAL ACCESS NETWORK" IEEE COMMUNICATIONS MAGAZINE, IEEE SERVICE CENTER. PISCATAWAY, N.J, US, Bd. 38, Nr. 1, Januar 2000 (2000-01), Seiten 66-72, XP000908339 ISSN: 0163-6804
- FROWIN DER ET AL: "AN OPTICAL INFRASTRUCTURE FOR FURURE TELECOMMUNICATIONS NETWORKS" IEEE COMMUNICATIONS MAGAZINE, IEEE SERVICE CENTER. PISCATAWAY, N.J, US, Bd. 33, Nr. 11, 1. November 1995 (1995-11-01), Seiten 84-88, XP000545290 ISSN: 0163-6804
- MOON CONSORTIUM: "MOON final report" , 26. Februar 1999 (1999-02-26), XP002203058 Gefunden im Internet: <URL:ftp://ftp.cordis.lu/pub/infowin/docs/ fr-231.pdf> [gefunden am 2000-03-07]

## Beschreibung

Die vorliegende Erfindung betrifft das Gebiet der optischen Nachrichtenübertragung und zwar insbesondere eine optische Schaltstation und ein Verfahren zum Vermitteln eines Nachrichtensignals in einer optischen Schaltstation.

Optische Schaltstationen dienen als Knoten von optischen Netzwerken. Sie sind paarweise untereinander durch optische Fasern verbunden, auf denen Nachrichtensignale in Form modulierter Lichtsignale von einer Schaltstation zur anderen übertragen werden. Eine optische Faser kann eine große Zahl von Nachrichtensignalen gleichzeitig jeweils in Form von modulierten Trägerwellen mit unterschiedlicher Wellenlänge übertragen.

Bei einem optischen Netzwerk, das mit Wellenlängenmultiplex arbeitet, ist es wünschenswert, in einer Schaltstation Nachrichtensignale, die auf unterschiedlichen Trägerwellenlängen eines gleichen Multiplex moduliert sind, unabhängig voneinander vermitteln zu können. Es kann daher zu Situationen kommen, wo zwei Nachrichtensignale, die an einer optischen Schaltstation über verschiedene Eingangskanäle eintreffen und die gleiche Trägerwellenlänge haben, an einen gleichen Ausgangskanal vermittelt werden sollen. Es ist jedoch nicht möglich, beide Nachrichtensignale mit der gleichen Trägerwellenlänge auf dem gleichen Ausgangskanal zu übertragen. Daher benötigen die optischen Schaltstationen in einem solchen optischen Netzwerk Wellenlängenwandler, die es erlauben, die Wellenlänge eines dieser beiden Nachrichtensignale auf eine auf dem Ausgangskanal noch unbelegte Wellenlänge zu verschieben. Zwei Beispiele für eine solche Schaltstation sind in R. Sabella et al. "Impact of Transmission Performance on Path Routing in All-Optical Transport Networks", EEE Journal of Lightwave Technology, Vol. 16, p. 1965 et seq., 1998, beschrieben. Die Schaltstation aus Fig. 1(a) dieses Dokuments weist eine Mehrzahl von Schaltmatrizen auf, von denen jede einen mit einem Block von Wellenlängenwandlern verbundenen Ausgang und Eingang hat. Als Demultiplexer zum Verteilen der einzelnen Nachrichtensignale auf die Schaltmatrizen dienen abstimmbare Filter, was vermuten lässt, dass eine gegebene Wellenlängenkomponente eines eintreffenden Wellenlängenmultiplex an verschiedene Schaltmatrizen weitergeleitet werden kann. Bei der Schaltstation aus Fig. 1(b) dieses Dokuments werden die gedemultiplexten Nachrichtensignale sämtlich über eine einzige Schaltmatrix vermittelt, die offensichtlich in der Lage sein muss, unterschiedliche Wellenlängen zu verarbeiten. Es gibt mehrere Wellenlängenwandler, die jeweils einen Ausgang mit einem Eingang der Schaltmatrix verbinden. Die Zahl der Schalter in einer solchen Schaltmatrix ist sehr hoch, da jeder Eingang mit jedem Ausgang verbindbar sein muss.

Aufgabe der Erfindung ist, eine optische Schaltstation und ein Verfahren zum Vermitteln eines Nachrichtensignals in einer optischen Schaltstation anzugeben, die eine Wellenlängenkonversion mit geringem technischen Aufwand ermöglichen.

Die Aufgabe wird zum einen gelöst durch eine optische Schaltstation mit einer ersten Mehrzahl von Eingangskanälen für Durchgangsdatenverkehr, einer zweiten Mehrzahl von Ausgangskanälen für Durchgangsdatenverkehr, einer Mehrzahl von ersten optischen Schaltmatrizen, die eine erste Gruppe von Eingangsanschlüssen, die mit den Eingangskanälen der Schaltstation verbunden sind, und eine erste Gruppe von Ausgangsanschlüssen, die mit den Ausgangskanälen der Schaltstation verbunden sind, aufweist, zum Verbinden von Eingangs- und Ausgangskanälen untereinander, und einer Gruppe von einer oder mehreren als Wellenlängenwandler ausgebildeten Signalformereinheiten, sowie mit Mitteln zum Verbinden einer zweiten Gruppe von Ausgangsanschlüssen der ersten optischen Schaltmatrizen mit jeweils einem Eingang einer Signalformereinheit der Gruppe und Mitteln zum Verbinden einer zweiten Gruppe von Eingangsanschlüssen der ersten optischen Schaltmatrizen mit jeweils einem Ausgang dieser Signalformereinheiten, wobei die ersten Schaltmatrizen jeweils zum Schalten von Nachrichtensignalen einer gleichen, der betreffenden ersten Schaltmatrix zugeordneten Wellenlänge vorgesehen sind und die Mittel zum Verbinden geeignet sind, den Eingang und den Ausgang eines Wellenlängenwandlers mit jeweils verschiedenen ersten Schaltmatrizen zu verbinden. Diese optische Schaltstation erlaubt es, ein Nachrichtensignal, das nicht unmittelbar auf einen Ausgangskanal ausgegeben werden kann, weil auf dem gewünschten Ausgangskanal die Wellenlänge des betreffenden Nachrichtensignals besetzt ist, auf einen Ausgangsanschluss der zweiten Gruppe durchzuschalten, so dass das Nachrichtensignal der benötigten Wellenlängenwandlung unterzogen werden kann, und anschließend das geformte Signal einem Eingangsanschluss der zweiten Gruppe einer ersten optischen Schaltmatrix zuzuführen, von wo aus die betreffende erste Schaltmatrix dieses Signal zum ursprünglich gewünschten Ausgangsanschluss weiterleiten kann.

Als Mittel zum Verbinden der Signalformereinheiten mit einer der ersten optischen Schaltmatrix können fest verdrahtete Leitungen zwischen einem Ausgang oder Eingang einer Signalformereinheit und einem Eingangs- bzw. Ausgangsanschluss der ersten Schaltmatrix vorgesehen werden.

Die Mittel zum Verbinden können jedoch auch als Schaltelemente zum wahlweisen Verbinden eines Ausgangs oder Eingangs einer Signalformereinheit mit einem von mehreren Eingangs- ' bzw. Ausgangsanschlüssen der ersten Schaltmatrix ausgebildet sein. Dies ist insbesondere dann zweckmäßig, wenn die Schaltstation eine Mehrzahl von ersten Schaltmatrizen umfasst, um die Signalformereinheiten je nach Bedarf einer der mehreren ersten Schaltmatrizen zuordnen zu können. Derartige Schaltelemente sind insbesondere auch dann wünschenswert, wenn die Signalformereinheiten Wellenlängenwandler sind, von denen nicht notwendigerweise jeder in der Lage ist, sämtliche auf den Ein- und Ausgangskanälen übertragenen Wellenlängen zu erzeugen, und die daher zweckmäßigerweise immer mit denjenigen ersten Schaltmatrizen verbindbar sein sollten, bei denen Bedarf nach einem solchen Wellenlängenwandler besteht.

Die Mittel zum Verbinden umfassen vorzugsweise wenigstens eine zweite Schaltmatrix, die die Ausgangsanschlüsse der zweiten Gruppe der ersten Schaltmatrizen wahlweise mit einem der Wellenlängenwandler verbindet. Dies erlaubt es, einfache Wellenlängenwandler zu verwenden, die zwar in einem breiten Wellenlängenintervall empfindlich sind, welches alle Wellenlängen des Multiplex umfasst, die aber nur auf einer einzigen Wellenlänge dieses Multiplex senden können. Hier ist die zweite Schaltmatrix hilfreich, um jedes Nachrichtensignal, dessen Trägerwellenlänge gewandelt werden muss, mit dem genau benötigten Wellenlängenwandler zu verbinden, egal, an welchem Ausgangsanschluss welcher ersten Schaltmatrix das zu wandelnde Signal ausgegeben wird.

Vorzugsweise umfassen die Mittel zum Verbinden ferner wenigstens eine dritte Schaltmatrix, die die Wellenlängenwandler wahlweise mit einem der Eingangsanschlüsse der zweiten Gruppe der ersten Schaltmatrizen verbindet. Die dritte Schaltmatrix ermöglicht eine dynamische Zuordnung der Wellenlängenwandler zu verschiedenen Eingangsanschlüssen der zweiten Gruppe, so dass nicht jedem dieser Eingangsanschlüsse ein Wellenlängenwandler fest zugeordnet sein muss. Da die Wellenlängenwandler somit je nach Bedarf verschiedenen Eingangsanschlüssen zugeordnet werden können, ist es nicht notwendig, jedem dieser Eingangsanschlüsse einen eigenen Wellenlängenwandler zuzuordnen, und die Zahl der benötigten Wellenlängenwandler wird verringert.

Vorzugsweise ist jeder Eingangskanal mit den ersten Schaltmatrizen über einen Wellenlängen-Demultiplexer und/oder die ersten Schaltmatrizen mit dem Ausgangskanal über einen Wellenlängen-Multiplexer verbunden. Dies erlaubt die Nutzung der Eingangs- bzw. Ausgangskanäle im Wellenlängenmultiplex, wohingegen innerhalb der Schaltstation die Nachrichtensignale nach Wellenlängen getrennt gehandhabt werden.

Die Ein- und Ausgänge der zweiten Gruppe können nicht nur zum Versorgen der Signalformereinheiten genutzt werden, sondern auch zum lokalen Abzweigen oder Hinzufügen von Nachrichtensignalen aus dem bzw. in den Multiplex.

Vorzugsweise werden als Wellenlängenwandler solche mit einem wellenlängenabstimmbaren Senderteil eingesetzt. Diese sind zwar technisch aufwendiger als Wellenlängenwandler mit festfrequentem Senderteil, doch wird von ihnen auch nur eine geringere Anzahl benötigt, um ein gegebenes Maß an Verfügbarkeit zu erreichen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Blockschältbild einer nicht erfindungsgemäßen optischen Schaltstation mit einer einzigen Schaltmatrix für den Betrieb bei einer einzigen Wellenlänge und mit Signalregeneratoren;
- Fig. 2: eine weiterentwickelte Schaltstation mit Regeneratoren für Wellenlängenmultiplexbetrieb;
- Fig. 3: eine erfindungsgemäße optische Schaltstation mit festfrequenten Wellenlängenwandlern; und
- Fig. 4: eine erfindungsgemäße optische Schaltstation mit abstimmbaren Wellenlängenwandlern.

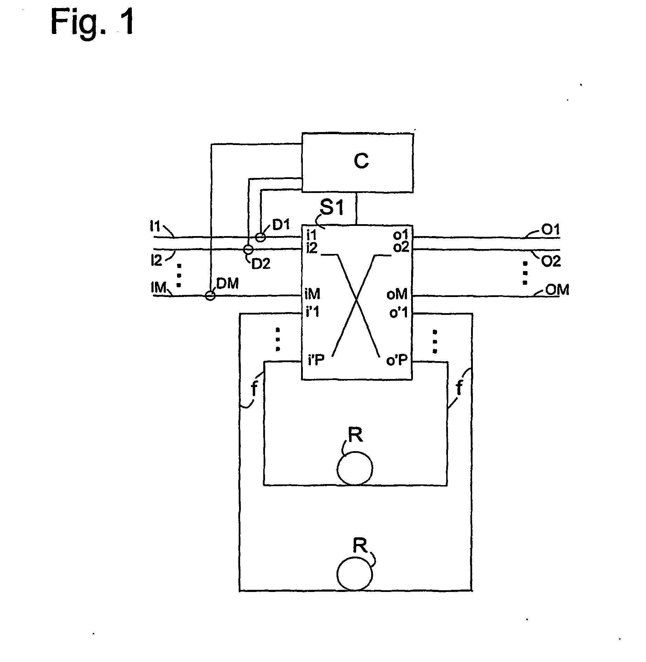

Die in Fig. 1 gezeigte Schaltstation umfasst eine einzige Schaltmatrix S1 mit Eingangsanschlüssen i1, i2, ..., iM, i'1, ..., i'P und Ausgangsanschlüssen o1, o2, ..., oM, o'1, ..., o'P. Eine erste Gruppe i1, ..., iM der Eingangsanschlüsse ist mit Eingangskanälen I1, ..., IM, hier in Form von jeweils ein festfrequentes Nachrichtensignal führenden optischen Fasern, verbunden. Entsprechend ist eine erste Gruppe o1, ..., oM der Ausgangsanschlüsse mit monochromatischen Ausgangskanälen o1, ..., OM verbunden. Ausgangsanschlüsse o'1, ..., o'P sind jeweils über Regeneratoren R mit Eingangsanschlüssen i'1, ..., i'P über optische Fasern f fest verdrahtet verbunden. Eine Steuerschaltung C empfängt in an sich bekannter und hier nicht dargestellter Weise Leitweginformation, die für jeden der Eingangsanschlüsse i1 bis iM festlegt, mit welchem der Ausgangsanschlüsse o1, oM der ersten Gruppe dieser verbunden werden soll. Die Steuerschaltung C ist ferner mit vor jedem Eingangsanschluss i1, i2, ..., iM der ersten Gruppe angeordneten Detektoren D1, D2, ..., DM zum Erfassen der Qualität eines an dem Eingangsanschluss eintreffenden Nachrichtensignals verbunden. Wenn das Erfassungsergebnis eines dieser Detektoren angibt, dass die Qualität zum Beispiel des Nachrichtensignals am Eingangsanschluss i2 schlecht ist und einer Regenerierung bedarf, so steuert die Steuerschaltung C die Schaltmatrix S1 abweichend von der ihr zugeführten, das Signal am Eingangsanschluss i2 betreffenden Leitweginformation so an, dass dieses Nachrichtensignal an einen Ausgangsanschluss der zweiten Gruppe, zum Beispiel den Ausgangsanschluss o'1, ausgegeben wird. So durchläuft das Nachrichtensignal einen der Regeneratoren R und tritt am Eingangsanschluss i'1 wieder in die Schaltmatrix S1 ein. Dieser Eingangsanschluss i'1 wird nun mit den der Leitweginformation zufolge als Ausgangsanschluss für das Nachrichtensignal vorgesehenen Ausgangsanschluss verbunden. Das zu regenerierende Nachrichtensignal durchläuft also die Schaltmatrix S1 zweimal, vor bzw. nach dem Regenerieren.

Nachrichtensignale, bei denen festgestellt wird, dass keine Regenerierung erforderlich ist, durchlaufen die Schaltmatrix S1 nur einmal. Die Leistungsverluste, die diese Nachrichtensignale in der Schaltstation erfahren, sind (unter Vernachlässigung eventueller Verluste durch die Detektoren D1, ..., Dn) die gleichen wie bei einer Schaltstation ohne Regenerierungsfunktion. Die Schaltstation ermöglicht also eine selektive Regenerierung ohne Einfügungsverluste an nicht regenerierten Nachrichtensignalen.

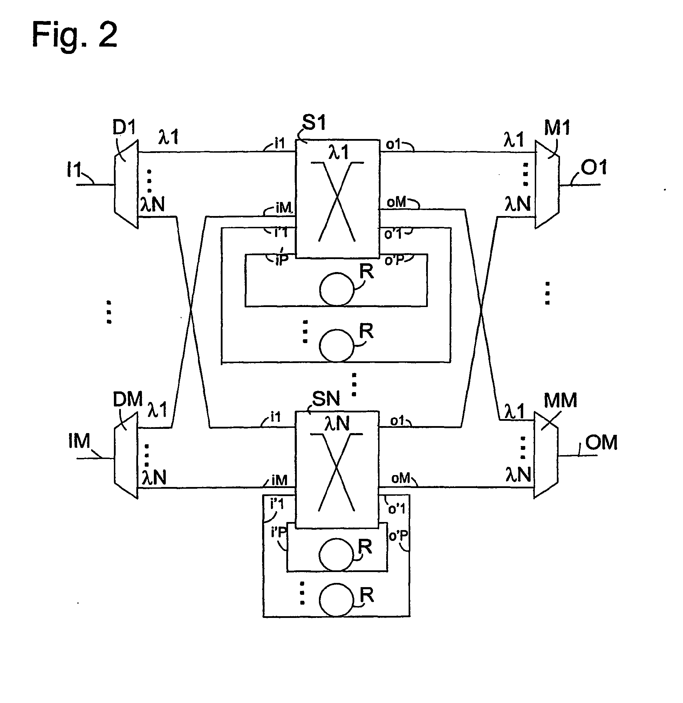

Bei der Schaltstation der Fig. 1 verarbeitet die Schaltmatrix S1 nur Nachrichtensignale einer gleichen Wellenlänge, die jeweils von verschiedenen Eingangskanälen herrühren. Selbstverständlich ist es alternativ auch möglich, mehrere Nachrichtensignale im Wellenlängenmultiplex auf einem Eingangskanal zu befördern, sie über einen Demultiplexer verschiedenen Eingangsanschlüssen der Schaltmatrix zuzuführen und in der Schaltmatrix vermittelte Nachrichtensignale unterschiedlicher Wellenlänge über Multiplexer einem gemeinsamen Ausgangskanal zuzuführen. Da bei einem solchen Aufbau die Größe der Schaltmatrix mit dem Quadrat der Zahl der zu vermittelnden Signale anwächst, ist für die Vermittlung von wellenlängengemultiplexten Nachrichtensignalen ein Aufbau wie in Fig. 2 gezeigt bevorzugt.

Fig. 2 zeigt eine Schaltstation mit Regenerierungsfunktion für ein optisches Netzwerk mit Wellenlängenmultiplexübertragung. Die Eingangskanäle I1, ..., IM sind hier jeweils von einer (nicht gezeigten) entfernten Schaltstation kommende optische Fasern, auf denen ein Multiplex von auf unterschiedliche Trägerwellenlängen λ1, ..., λN aufmodulierten Nachrichtensignalen übertragen wird. Die Eingangskanäle münden jeweils auf Wellenlängen-Demultiplexer D1, ..., DM, die den Multiplex spektral zerlegen und die darin enthaltenen Nachrichtensignale an N Schaltmatrizen S1, ..., SN verteilen, die jeweils einer der Wellenlängen λ1, ... , λN zugeordnet sind. Diese Schaltmatrizen S1, ..., SN entsprechen jeweils der monochromatischen Schaltmatrix S1 aus Fig. 1: sie haben eine erste Gruppe von Eingangsanschlüssen i1, ..., iM, die jeweils über einen der Demultiplexer D1, ..., DM mit einem der Eingangskanäle I1, IM verbunden sind, Eingangsanschlüsse i'1, ..., i'P, die jeweils mit dem Ausgang eines Regenerators R verbunden sind, Ausgangsanschlüsse o1, ..., oM einer ersten Gruppe und Ausgangsanschlüsse o'1 bis o'P, die jeweils mit den Eingängen der Regeneratoren R verbunden sind. An jeden Ausgangsanschluss der ersten Gruppe o1, ..., oM ist ein Wellenlängenmultiplexer M1, ..., MM mit je N Eingängen, einem für jede Schaltmatrix s1, ..., SN, angeschlossen, der die von den verschiedenen Schaltmatrizen empfangenen Nachrichtensignale unterschiedlicher Wellenlänge zu einem Multiplexsignal überlagert und auf einen Ausgangskanal O1, ..., OM ausgibt. Detektoren zum Erfassen der Signalqualität sind auch hier auf den die Demultiplexer mit den Schaltmatrizen verbundenen Leitungsstücken vorgesehen, doch sind sie, genauso wie die Steuerschaltung, der Übersichtlichkeit halber nicht dargestellt. Die Arbeitsweise der einzelnen Schaltmatrizen ist die gleiche wie im Falle der Fig. 1: nicht zu regenerierende Nachrichtensignale mit einer Trägerwellenlänge λn, n=1, ..., N durchlaufen die ihnen zugeordnete Schaltmatrix Sn einmal, ein zu regenerierendes Signal wird in der Schaltmatrix zu einem Regenerator R abgezweigt, und anschließend wird das regenerierte Signal in der gleichen Schaltmatrix an den vorgesehenen Ausgangskanal vermittelt.

Bei der Schaltstation der Fig. 2 können Kollisionen auftreten, wenn eine Schaltmatrix von zwei Demultiplexern Nachrichtensignale empfängt, die für den gleichen Ausgangskanal bestimmt sind. Es steht nämlich nur ein Ausgangsanschluss an der Schaltmatrix zur Verfügung, der zu dem gewünschten Ausgangskanal führt. In einer solchen Situation kann nur eines der zwei Signale vermittelt werden.

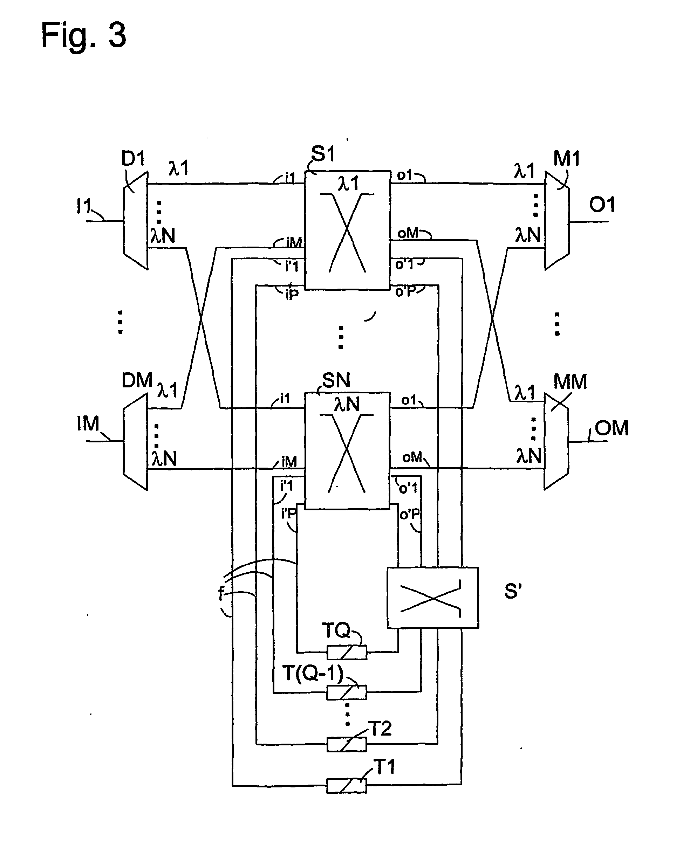

Fig. 3 zeigt ein Blockdiagramm einer erfindungsgemäßen Schaltstation, die dieses Problem löst. Eingangs- und Ausgangskanäle, Multiplexer, Demultiplexer und Schaltmatrizen S1, ..., SN sind die gleichen wie bei der Ausgestaltung der Fig. 2 und werden nicht erneut erläutert. Die Ausgangsanschlüsse o'1, ..., o'P der zweiten Gruppe der Schaltmatrizen S1, ..., SN sind auf Eingangsanschlüsse einer weiteren optischen Schaltmatrix S' geführt, deren Ausgangsanschlüsse wiederum mit Eingängen von Wellenlängenwandlern T1, T2, ..., TQ verbunden sind. Die Wellenlängenwandler umfassen hier jeweils eine für alle Wellenlängen λ1, ..., λN des Multiplex empfindliche Fotodiode, die das von der Schaltmatrix S' kommende optische Nachrichtensignal in ein elektrisches Signal wandelt, daran angeschlossene elektrische Schaltungen zur Impulsformung und -verstärkung sowie eine mit dem Ausgangssignal dieser elektrischen Schaltungen angesteuerte Laserdiode mit fester Wellenlänge, die das regenerierte optische Nachrichtensignal liefert. Die Wellenlängenwandler T1, T2, ..., TQ haben somit gleichzeitig auch eine Regenerationsfunktion. Der Ausgang jedes Wellenlängenwandlers ist durch ein optisches Faserstück f fest verdrahtet mit einem Eingangsanschluss der zweiten Gruppe der seiner Wellenlänge zugeordneten Schaltmatrix S1, ..., oder SN verbunden.

Die Schaltmatrix S' ist in der Lage, alle ihre Eingangs- und Ausgangsanschlüsse wahlfrei paarweise miteinander zu verbinden. Ein zu formendes Nachrichtensignal kann somit über die Matrix S' einem Wellenlängenwandler mit jeder beliebigen Ausgangswellenlänge des Multiplex, einschließlich der gegenwärtigen Wellenlänge des Nachrichtensignals zugeführt werden. Dieser letztere Fall entspricht einer einfachen Regenerierung des Nachrichtensignals, ohne gleichzeitige Wellenlängenwandlung.

Die Schaltmatrizen S1, ..., SN sind hier mit jeweils zwei Eingangs- bzw. Ausgangsanschlüssen der zweiten Gruppe dargestellt, doch liegt auf der Hand, dass die Zahl dieser Anschlüsse zwischen 1 und M beliebig gewählt werden kann.

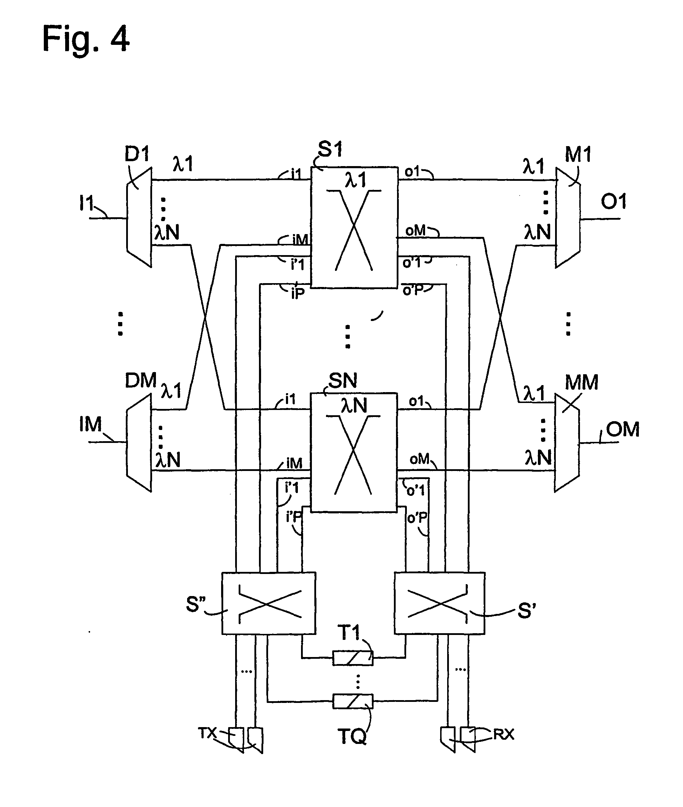

Fig. 4 zeigt eine weiterentwickelte Ausgestaltung der Schaltstation. Die Schaltstation aus Fig. 4 unterscheidet sich von der der Fig. 3 dadurch, dass bei ersterer die Wellenlängenwandler T1, ..., TQ anstelle einer Laserdiode mit fester Wellenlänge eine Laserdiode enthalten, die auf die verschiedenen Wellenlängen λ1, ..., λN des Multiplex oder zumindest auf eine Mehrzahl dieser Wellenlängen abstimmbar ist. Um ein in einem solchen Wellenlängenwandler gewandeltes Nachrichtensignal an die der Wellenlänge des gewandelten Signals zugeordnete Matrix unter den Schaltmatrizen S1, ..., SN weiterleiten zu können, ist eine dritte Schaltmatrix S" zwischen den Ausgängen der Wellenlängenwandler T1, ..., TQ und den Eingangsanschlüssen der zweiten Gruppe der Schaltmatrizen S1, ..., SN erforderlich. Die Zahl der abstimmbaren Wellenlängenwandler, die benötigt wird, um ein vorgegebenes Maß an Sicherheit vor Wellenlängenkollisionen in der Schaltstation zu erreichen, ist kleiner als bei der Ausgestaltung der Fig. 3 mit festfrequenten Wellenlängenwandlern. Dabei ist die Einsparung um so größer, je größer die Zahl N der Wellenlängen des Multiplex ist. Daher kann eine Schaltstation nach Fig. 4 trotz der zusätzlichen Schaltmatrix und der aufwendigeren Wellenlängenwandler kompakter und preiswerter realisierbar sein als eine Schaltstation nach Fig. 3.

Außerdem sind die zweite und dritte Schaltmatrix S', S" auch brauchbar, um Nachrichtensignale am Ort der Schaltstation selbst zu Empfängern RX abzuzweigen oder von Sendern TX einzuspeisen.

## Patentansprüche

1. Optische Schaltstation mit:
- einer ersten Mehrzahl von Eingangskanälen (I1, ..., IM) für Durchgangsdatenverkehr,
- einer zweiten Mehrzahl von Ausgangskanälen (O1, ..., OM) für Durchgangsdatenverkehr
- einer Mehrzahl von ersten optischen Schaltmatrizen (S1, ..., SN), die eine erste Gruppe von Eingangsanschlüssen(il, i2, ..., iM), die mit Eingangskanälen (I1, ..., IM) der Schaltstation verbunden sind, und eine erste Gruppe von Ausgangsanschlüssen (o1, o2, ..., oM), die mit Ausgangskanälen (O1, ..., OM) der Schaltstation verbunden sind, aufweisen, zum Verbinden von Eingangs- und Ausgangskanälen untereinander,
- einer Gruppe von einer oder mehreren als Wellenlängenwandler ausgebildeten Signalformereinheiten (T1, ..., TQ),
- Mitteln (f, S') zum Verbinden einer zweiten Gruppe von Ausgangsanschlüssen (o'1, o'2,...,o'P) der ersten optischen Schaltmatrizen (S1, ..., SN) mit jeweils einem Eingang einer Signalformereinheit der Gruppe und Mitteln (f, S") zum Verbinden einer zweiten Gruppe (i'1, ..., i'P) von Eingangsanschlüssen der ersten optischen Schaltmatrizen (S1, ..., SN) mit jeweils einem Ausgang einer dieser Signalformereinheiten, **dadurch gekennzeichnet, dass** die ersten Schaltmatrizen (S1, ..., SN) jeweils zum Schalten von Nachrichtensignalen einer gleichen, der betreffenden ersten Schaltmatrix zugeordneten Wellenlänge vorgesehen sind, und dass die Mittel zum Verbinden (S', f; S', S") geeignet sind, den Eingang und den Ausgang eines Wellenlängenwandlers (T1, ..., TQ) mit jeweils verschiedenen ersten Schaltmatrizen (S1, ..., SN) zu verbinden.

2. Optische Schaltstation nach Anspruch 1, **dadurch gekennzeichnet, dass** die Mittel zum Verbinden fest verdrahtete Leitungen (f) zwischen einem Ausgang oder Eingang einer Signalformereinheit und einem Eingangs- bzw. Ausgangsanschluss (i' 1, ..., i'P; o'1, ..., o'P) der ersten Schaltmatrizen (S1, ..., SN) umfassen.

3. Schaltstation nach Anspruch 1 oder 2, **dadurch gekennzeichnet, dass** die Mittel zum Verbinden Schaltelemente (S' S") zum wahlweisen Verbinden eines Ausgangs oder Eingangs einer Signalformereinheit mit einem von mehreren Eingangs- bzw. Ausgangsanschlüssen der ersten Schaltmatrizen umfassen.

4. Optische Schaltstation nach einem der vorhergehenden Ansprüche, **dadurch gekennzeichnet, dass** jede Signalformereinheit (R, T1, ..., TQ) zum Formen eines einzelnen Nachrichtensignals ausgelegt ist.

5. Optische Schaltstation nach einem der vorhergehenden Ansprüche, **dadurch gekennzeichnet, dass** die Mittel zum Verbinden wenigstens eine zweite Schaltmatrix (S') umfassen, die die Ausgangsanschlüsse (o'1, ..., o'P) der zweiten Gruppe der ersten Schaltmatrizen (S1, ..., SN) wahlweise mit einem der Wellenlängenwandler (T1, ..., TQ) verbindet.

6. Optische Schaltstation nach einem der vorhergehenden Ansprüche, **dadurch gekennzeichnet, dass** die Mittel zum Verbinden wenigstens eine dritte Schaltmatrix (S") umfassen, die die Wellenlängenwandler (T1, ..., TQ) wahlweise mit einem der Eingangsanschlüsse (i'1, ..., i'P) der zweiten Gruppe der ersten Schaltmatrizen (S1, ..., SN) verbindet.

7. Optische Schaltstation nach einem der vorhergehenden Ansprüche, **dadurch gekennzeichnet, dass** jeder Eingangskanal (I1, ..., IM) mit den ersten Schaltmatrizen **(S1,** ..., SN) über einen Wellenlängen-Demultipl.exer (D1, ..., DM) und/oder die ersten Schaltmatrizen (S1, .... SN) mit jedem Ausgangskanal (O1, ..., OM) über einen Wellenlängen-Multiplexer (M1, ..., MM) verbunden sind.

8. Optische Schaltstation nach einem der vorhergehenden Ansprüche, **dadurch gekennzeichnet, dass** sie Ein- und/oder Ausgänge (IE, OE) für Abzweig-Datenverkehr und Mittel (f, SE) zum Verbinden dieser Ein- bzw. Ausgänge mit Eingangs- bzw. Ausgangsanschlüssen (i'1, ..., i'P; o'1, ..., o'P) der zweiten Gruppe der ersten Schaltmatrizen (S1, ..., SN) aufweist.

9. Optische Schaltstation nach einem der vorhergehenden Ansprüche, **dadurch gekennzeichnet, dass** die Wellenlängenwandler (T1, ..., TQ) jeweils einen wellenlängenabstimmbaren Senderteil aufweisen.

10. Optische Schaltstation nach einem der vorhergehenden Ansprüche, **dadurch gekennzeichnet, dass** die Eingangsanschlüsse (i1, ..., iM) der ersten Gruppe mit den Eingangskanälen (I1, ..., IM) und/oder die Ausgangsanschlüsse (o1, ..., oM) der ersten Gruppe mit den Ausgangskanälen (O1, .... OM) jeweils ohne Zwischenschaltung einer Schaltmatrix verbunden sind.

11. Verfahren zum Vermitteln eines Nachrichtensignals in einer optischen Schaltstation, insbesondere in einer optischen Schaltstation nach einem der vorhergehenden Ansprüche, mit einer Mehrzahl von parallel zueinander zwischen einer Mehrzahl von Eingangskanälen und einer Mehrzahl von Ausgangskanälen verbundenen Schaltmatrizen (S1, ..., SN), von denen jede zum Schalten von Nachrichtensignalen einer gleichen, ihr zugeordneten Wellenlänge vorgesehen ist, mit den Schritten:
a) Empfangen des Nachrichtensignals über einen Eingangskanal (I1, ..., IM) der Schaltstation,
b) Zuordnen eines Ausgangskanals (O1,..., OM) zu dem Nachrichtensignal,
c) Entscheiden, ob eine Wellenlängenwandlung an dem Nachrichtensignal durchgeführt werden muss,
d) Eingeben des Nachrichtensignals in die seiner Wellenlänge zugeordnete Schaltmatrix (S1, ..., SN),
e) wenn in Schritt c) eine Wellenlängenwandlung für notwendig befunden wurde:
e1) Ausgeben des Signals an einem Ausgangsanschluss (o'1, ..., o'P) der Schaltmatrix (S1, ..., SN), der mit einem Wellenlängenwandler (T1, ..., TQ) verbunden ist,
e2) Durchführen der Wellenlängenwandlung,
e3) Eingeben des Nachrichtensignals in eine andere, der gewandelten Wellenlänge des Nachrichtensignals zugeordnete Schaltmatrix aus der Mehrzahl der parallelen Schaltmatrizen (S1, ..., SN),
f) Ausgeben des Nachrichtensignals aus der Schaltmatrix (S1, ..., SN) auf den zugeordneten Ausgangskanal (O1, ..., OM).

## Claims

1. An optical cross connect comprising:
- a first plurality of input channels (I1, ..., IM) for transit data traffic,
- a second plurality of output channels (O1, ..., OM) for transit data traffic,
- a plurality of first optical switching fabrics (S1, ..., SN) comprising a first group of input ports (i1, i2, ..., iM) which are connected to input channels (I1, ..., IM) of the cross connect and a first group of output ports (o1, o2, ..., oM) which are connected to output channels (O1, ..., OM) of the cross connect, for interconnecting input and output channels,
- a group of one or more signal shaping units (R; T1, ..., TQ; RX; SE, TX) formed as wavelength converters,
- means (f, S') for connecting a second group of output ports (o'1, o'2, ..., o'P) of the first optical switching fabrics (S1, ..., SN) to a respective input of a signal shaping unit of the group and means (f, S") for connecting a second group (I' 1, ..., I"P) of input ports of the first optical switching fabrics (S1, ..., SN) to a respective output of one of said signal shaping units,
**characterized in that** each of said first switching fabrics (S1, ..., SN) is provided for switching communication signals at a same wavelength assigned to said first switching fabric, and that the connecting means (S', f; S', S") are adapted to connect the input and the output of a wavelength converter (T1, ..., TQ) with different first switching fabrics (S1, ..., SN) .

2. The optical cross connect of claim 1, **characterized in that** the connecting means comprise wired lines (f) between an output or input of the signal shaping unit and an input port or output port (i'1, ..., i'P; o'1, ..., o'P), respectively, of the first switching fabrics (S1, ..., SN).

3. The cross connect of claim 1 or 2, **characterized in that** the connecting means comprise switching elements (S', S") for selectively connecting an output or an input of a signal shaping unit to one of several input or output ports, respectively, of the first switching fabrics.

4. The optical cross connect according to one of the preceding claims, **characterized in that** each signal shaping unit (R, T1, ..., TQ) is adapted to shape an individual communication signal.

5. The optical cross connect according to one of the preceding claims, **characterized in that** the connecting means comprise at least one second switching fabric (S') which selectively connects the second group output ports (o' 1, ..., o'P) of the first switching fabrics (S1, ..., SN) to one of the wavelength converters (T1, ..., TQ) .

6. The optical cross connect according to one of the preceding claims, **characterized in that** the connecting means comprise at least a third switching fabric (S") which selectively connects the wavelength converters (T1, ..., TQ) to one of the second group input ports (i'1, ..., i'P) of the first switching fabrics (S1, ..., SN) .

7. The optical cross connect according to one of the preceding claims, **characterized in that** each input channel (I1, ..., IM) is connected to the first switching fabrics (S1, ..., SN) via a wavelength demultiplexer (D1, ..., DM) and/or the first switching fabrics (S1, ..., SN) are connected to each output channel (O1, ..., OM) via a wavelength multiplexer (M1, ..., MM).

8. The optical cross connect according to one of the preceding claims, **characterized in that** it comprises inputs and/or outputs (IM, OM) for branching data traffic and means (f, SE) for connecting these inputs or outputs to second group input or output ports (i'1, ..., i'P; o'1, ..., o'P) of the first switching fabrics (S1, ..., SN) .

9. The optical cross connect according to one of the preceding claims, **characterized in that** the wavelength converters (T1, ..., TQ) each have a wavelength-tuneable transmitter part.

10. The optical cross connect according to one of the preceding claims, **characterized in that** the first group input ports (i1, ..., iM) are connected to the input channels (I1, ..., IM) and/or the first group output ports (o1, ..., oM) are connected to the output channels (O1, ..., OM), respectively, without a switching fabric inserted in between.

11. A method for switching a communication signal in an optical cross connect, in particular in an optical cross connect according to one of the preceding claims, the cross connect comprising a plurality of switching fabrics (S1, ..., SN) connected in parallel between a plurality of input channels and a plurality of output channels, each of the switching fabrics being provided for switching communication signals of a same wavelength assigned to it, comprising the steps of:
a) receiving the communication signal by an input channel (I1, ..., IM) of the cross connect,
b) assigning an output channel (O1, ..., OM) to the communication signal,
c) deciding whether a wavelength conversion of the communication signal has to be carried out,
d) inputting the communication signal into a switching fabric (S1, ..., SN) assigned to its wavelength,
e) if a wavelength conversion was found necessary in step c):
e1) outputting the signal at an output port (o'1, ..., o'P) of the switching fabric (S1, ..., SN) which is connected to a wavelength converter (T1, ..., TQ),
e2) carrying out the wavelength conversion,
e3) inputting the communication signal into another switching fabric from the plurality of parallel switching fabrics (S1, ..., SN), to which the converted wavelength of the communication signal is assigned,
f) outputting the communication signal from the switching fabric (S1, ..., SN) to the output channel (O1, ..., OM) assigned to it.

## Revendications

1. Poste de commutation optique comprenant :
- une première pluralité de canaux d'entrée (I1, ..., IM) pour le trafic de communications de passage,
- une seconde pluralité de canaux de sortie (O1, ..., OM) pour le trafic de données de passage,
- une pluralité de premières matrices de commutation optiques (S1, ..., SN) qui présentent un premier groupe de connexions d'entrée (i1, i2, ..., iM) qui sont raccordées aux canaux d'entrée (I1, ..., IM) du poste de commutation, et un premier groupe de connexions de sortie (o1, o2, ..., oM) qui sont raccordées aux canaux de sortie (O1, ..., OM) du poste de commutation, pour le raccordement entre eux de canaux d'entrée et de sortie,
- un groupe d'une ou de plusieurs unités de formation de signaux (T1, ..., TQ) formées comme des convertisseurs de longueurs d'ondes,
- des moyens (f, S') pour la liaison d'un deuxième groupe de connexions de sortie (o'1, o'2, ..., o'P) des premières matrices de commutation optiques (S1, ..., SN) avec chacune une entrée respective d'une unité de formation de signaux du groupe, et des moyens (f, S") pour la liaison d'un second groupe (i'1, ..., i'P) de connexions d'entrée des premières matrices de commutation optiques (S1, ..., SN) avec chacune une sortie respective de l'une de ces unités de formation de signaux, **caractérisé en ce que** les premières matrices de commutation (S1, ..., SN) sont respectivement prévues pour la commutation de signaux d'information d'une même longueur d'onde affectée à la première matrice de commutation correspondante, et **en ce que** les moyens pour la liaison (S', f ; S', S") sont aptes à relier l'entrée et la sortie d'un convertisseur de longueurs d'ondes (T1, ..., TQ) avec respectivement différentes premières matrices de commutation (S1, ..., SN).

2. Poste de commutation optique selon la revendication 1, **caractérisé en ce que** les moyens pour la liaison comprennent des conducteurs câblés (f) entre une sortie ou une entrée d'une unité de formation de signaux et une connexion d'entrée ou de sortie (i'1, ..., i'P ; o'1, ... o'P) des premières matrices de commutation (S1, ..., SN) .

3. Poste de commutation selon la revendication 1 ou 2, **caractérisé en ce que** les moyens pour la liaison comprennent des éléments de commutation (S', S") pour la liaison sélective d'une sortie ou d'une entrée d'une unité de formation de signaux avec l'une de la pluralité de connexions d'entrée ou de sortie des premières matrices de commutation.

4. Poste de commutation optique selon l'une des revendications précédentes, **caractérisé en ce que** chaque unité de formation de signaux (R, T1, ..., TQ) est conçue pour former un signal d'information individuel.

5. Poste de commutation optique selon l'une des revendications précédentes, **caractérisé en ce que** les moyens pour la liaison comprennent au moins une deuxième matrice de commutation (S') qui relie les connexions de sortie (o'1, ..., o'P) du second groupe des premières matrices de commutation (S1, ..., SN) sélectivement avec l'un des convertisseurs de longueurs d'ondes (T1, ..., TQ).

6. Poste de commutation optique selon l'une des revendications précédentes, **caractérisé en ce que** les moyens pour la liaison comprennent au moins une troisième matrice de commutation (S") qui relie le convertisseur de longueurs d'ondes (T1, ..., TQ) sélectivement avec l'une des connexions d'entrée (i'1, ..., i'P) du second groupe des premières matrices de commutation (S1, ..., SN).

7. Poste de commutation optique selon l'une des revendications précédentes, **caractérisé en ce que** chaque canal d'entrée (I1, ..., IM) est raccordé aux premières matrices de commutation (S1, ..., SN) par l'intermédiaire d'un démultiplexeur de longueurs d'ondes (D1, ..., DM) et/ou les premières matrices de commutation (S1, ..., SN) sont raccordées avec chaque canal de sortie (O1, ..., OM) par l'intermédiaire d'un multiplexeur de longueurs d'ondes (M1, ..., MM).

8. Poste de commutation optique selon l'une des revendications précédentes, **caractérisé en ce qu'**il comporte des entrées et/ou des sorties (IE, OE) pour le trafic de données en dérivation et des moyens (f, SE) pour la liaison de ces entrées ou sorties avec les connexions d'entrée ou de sortie (i'1, ..., i'P ; o'1, ... o'P) du second groupe des premières matrices de commutation (S1, ..., SN).

9. Poste de commutation optique selon l'une des revendications précédentes, **caractérisé en ce que** les convertisseurs de longueurs d'ondes (T1, ..., TQ) comportent respectivement une partie émettrice pouvant être accordée en longueur d'onde.

10. Poste de commutation optique selon l'une des revendications précédentes, **caractérisé en ce que** les connexions d'entrée (i1, ..., iM) du premier groupe sont raccordées aux canaux d'entrée (I1, ..., IM) et/ou les connexions de sortie (o1, ..., oM) du premier groupe sont raccordées aux canaux de sortie (O1, ..., OM), respectivement, sans la commutation intermédiaire d'une matrice de commutation.

11. Procédé pour la transmission d'un signal d'information dans un poste de commutation optique, en particulier dans un poste de commutation optique selon l'une des revendications précédentes, avec une pluralité de matrices de commutation (S1, ... , SN) raccordées parallèlement entre elles entre une pluralité de canaux d'entrée et une pluralité de canaux de sortie dont chacune est prévue pour la commutation de signaux d'information d'une même longueur d'onde qui lui est affectée, avec les étapes consistant à :
a) recevoir le signal d'information par l'intermédiaire d'un canal d'entrée (I1, ..., IM) du poste de commutation,
b) affecter un canal de sortie (O1, ..., OM) au signal d'information,
c) décider si une conversion de longueurs d'ondes doit être réalisée sur le signal d'information,
d) entrer le signal d'information dans la matrice de commutation affectée à sa longueur d'onde (S1, ..., SN),
e) lorsque, dans l'étape c), une conversion de longueurs d'ondes s'est révélée être nécessaire :
e1) émettre le signal à une connexion de sortie (o'1, ..., o'P) de la matrice de commutation (S1, ..., SN) qui est raccordée à un convertisseur de longueurs d'ondes (T1, ..., TQ),
e2) exécut.er la conversion de longueurs d'ondes,
e3) entrer le signal d'information dans une autre matrice de commutation affectée à la longueur d'onde convertie du signal d'information parmi la pluralité de matrices de commutation parallèles (S1, ..., SN),
f) émettre le signal d'information à partir de la matrice de commutation (S1, ..., SN) sur le canal de sortie affecté (O1, ..., OM).
